# EUROPÄISCHE PATENTANMELDUNG

(11) **EP 1 405 677 A2**
(43) Veröffentlichungstag der Anmeldung: **07.04.2004**
(21) Anmeldenummer: 03090229.0
(22) Anmeldetag: 24.07.2003
(51) Int. Cl.: B05B 15/04

(54) **Abdeckpflaster**

(30) Priorität: 01.10.2002 DE 20215206 U
(71) Anmelder: Max Steier GmbH & Co., 25311 Elmshorn (DE)
(72) Erfinder: Klein-Boss, Peter, 25337 Elmshorn (DE)
(74) Vertreter: Böning, Manfred, Prof.Dr.-Ing.

(57) **Zusammenfassung**

Ein für Oberflächenbehandlungsverfahren bestimmtes, selbstklebendes Abdeckpflaster besteht aus mindestens zwei Teilen (1, 2), von denen ein jedes Teil zwei Abschnitte (1a, 1b bzw. 2a, 2b) aufweist, von denen die Abschnitte (1a, 2a) eines Abschnittpaares die Abdeckfläche und die Abschnitte (1b, 2b) eines zweiten Abschnittpaares eine umklappbare, tabförmige Anfasszone (6) bilden.

## Beschreibung

Die Erfindung betrifft ein Abdeckpflaster für Oberflächenbehandlungsverfahren mit einer der von der Behandlung auszunehmenden Fläche eines Gegenstandes entsprechenden selbstklebenden Abdeckfläche und einer das Abziehen des Pflasters vom behandelten Gegenstand erleichternden Anfasszone.

Bekannt sind beispielsweise für Lackierarbeiten verwendete Abdeckpflaster der vorstehenden Art die, ähnlich wie aus der US 5 654 055 bekannte Abdeckbänder, mit kleberfreien Randbereichen versehen sind, welche beim Entfernen der Pflaster als Anfasszonen genutzt werden können. Die bekannten Pflaster vermögen insofern nicht voll zu befriedigen, als eine einwandfreie Abdeckung in den regelmäßig schmalen Randbereichen nicht gewährleistet ist.

Der Erfindung liegt die Aufgabe zugrunde, ein Abdeckpflaster der in Betracht gezogenen Art zu schaffen, das einerseits die Gewähr für eine sichere und maßgenaue Abdeckung bietet und andererseits bequem handhabbar ist. Gelöst wird diese Aufgabe erfindungsgemäß dadurch, dass das Pflaster aus mindestens zwei Teilen besteht, dass jeder der beiden Teile zwei Abschnitte aufweist, dass ein Abschnitt des einen Teiles zwecks Bildung einer umklappbaren, tabförmigen Anfasszone mit einem Abschnitt des anderen Teiles verbunden ist und dass die übrigen Abschnitte der beiden Teile die Abdeckfläche bilden.

Das erfindungsgemäße Abdeckpflaster bietet den Vorteil, dass es die von einer Oberflächenbehandlung auszunehmenden Flächen bis zu seiner Randkante einwandfrei abdeckt, wobei die nach Art eines Tabs oder Lasche ausgebildete, nicht klebende Anfasszone im hochgeklappten Zustand sowohl das Anbringen als auch das Entfernen des Pflasters außerordentlich einfach gestaltet.

Zweckmäßigerweise kommt die Anfasszone im umgeklappten Zustand innerhalb der Grenzen der Abdeckfläche zu liegen, d. h. sie ragt nicht über die Außenkanten des Abdeckpflasters, so dass die zu behandelnde Oberfläche keinesfalls durch die Anfasszone abgedeckt wird.

Als besonders vorteilhaft erweist es sich, wenn die Anfasszone in der Gebrauchsposition im Winkel zur Abdeckfläche angeordnet ist. Eine solche Gebrauchsposition, die auch das Ergreifen der Anfasszone erleichtert, kann beispielsweise durch die Eigenelastizität des Pflastermaterials und durch den konstruktiven Aufbau der Anfasszone erreicht werden.

Weitere Merkmale und Einzelheiten des erfindungsgemäßen Abdeckpflasters ergeben sich aus den Unteransprüchen, der nachstehenden Beschreibung und einer in der beigefügten Zeichnung dargestellten Ausführungsform der Erfindung. Es zeigen:
- Fig. 1: eine perspektivische Ansicht eines Abdeckpflasters und
- Fig. 2: einen Schnitt längs der Linie II-II in Fig. 1.

Das in den Figuren dargestellte Abdeckpflaster weist zwei von Folienzuschnitten gebildete Teile 1 und 2 auf. Jeweils eine Seite der Teile 1 und 2 ist mit einer Kleberschicht 3 und 4 versehen. Bei den Teilen 1 und 2 handelt es sich um Zuschnitte aus einem Bahnmaterial, das vorzugsweise aus Kunststoff, aber auch aus Papier, Gewebe oder Metallfolien bestehen kann.

Jeder der beiden Teile 1 und 2 besitzt zwei Abschnitte 1 a und 1 b bzw. 2a und 2b, von denen die Abschnitte 1b und 2b unter Zwischenschaltung einer Fahne 5 miteinander verbunden sind, die zusammen mit den Abschnitten 1 bund 2b eine umklappbare, im Wesentlichen laschenförmige Anfasszone 6 bildet. Die Fahne 5 dient zur Versteifung der Lasche 6 und kann zum leichteren Auffinden des Pflasters in Form und/oder Farbe optisch auffällig ausgestattet sein.

Die Summe der Flächen der Abschnitte 1 a und 2a und deren Form entspricht der abzudeckenden Fläche des jeweiligen Gegenstandes. Die Höhe und die Breite der Anfasszone 6 sind nicht größer als die Länge und die Breite der Abschnitte 1a und 2a der Teile 1 und 2. Somit kommt die Anfasszone 6 im umgeklappten, parallel zur Abdeckfläche orientierten Zustand innerhalb der Grenzen bzw. der Außenkanten der die Abdeckfläche bildenden Abschnitte 1 a, 2a zu liegen.

Da die Fahne 5 bei 7 endet und die Abschnitte 1b und 2b im Bereich ihres Überganges in die Abschnitte 1 a und 2a unmittelbar gegeneinander anliegen, bildet der Übergangsbereich ein das Hoch- und Umklappen der Anfasszone 6 erleichterndes Filmscharnier 8.

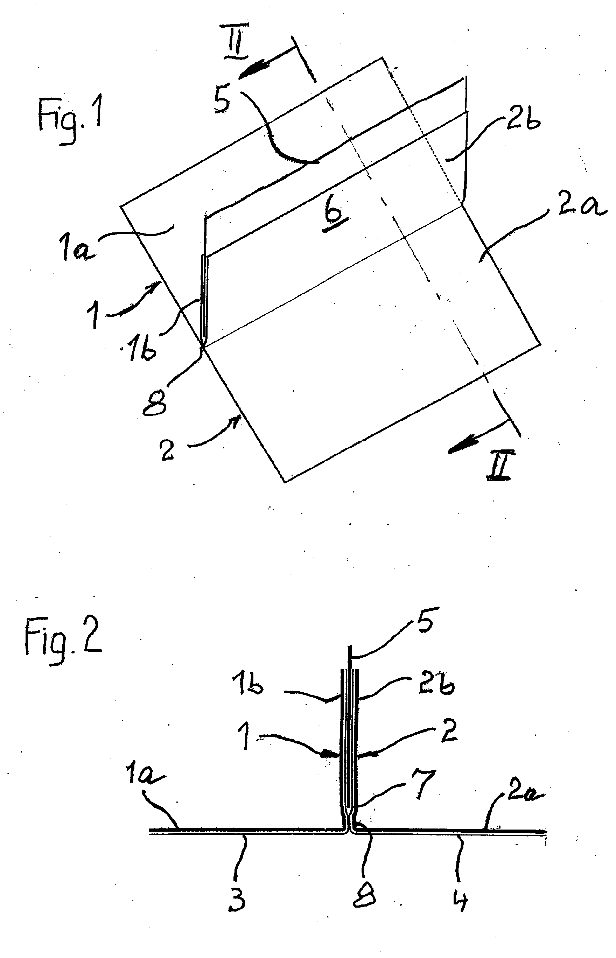

Wie in Figur 1 und 2 zu erkennen ist, nimmt die Anfasszone 6 in ihrer Gebrauchsposition einen Winkel zum Abdeckpflaster ein. In dieser Stellung verharrt die Anfasszone 6 aufgrund des Aufbaus aus den zwei gegeneinander hochgeklappten Abschnitten 1b, 2b und der optionalen Fahne 7 beispielsweise auch bei einem Lackiervorgang.

Die Form des Abdeckpflasters ist beliebig, beispielsweise eckig, wie in der dargestellten Ausführungsform oder rund. Die Form der Anfasszone korrespondiert mit der Grundform des Abdeckpflasters.

## Patentansprüche

1. Abdeckpflaster für Oberflächenbehandlungsverfahren mit einer der von der Behandlung auszunehmenden Oberfläche eines Gegenstandes entsprechenden selbstklebenden Abdeckfläche und einer nicht mit der Oberfläche verklebten, das Abziehen des Pflasters vom behandelten Gegenstand erleichternden Anfasszone, **dadurch gekennzeichnet, dass** das Pflaster aus mindestens zwei Teilen (1, 2) besteht, dass jeder der beiden Teile (1, 2) zwei Abschnitte aufweist, dass ein Abschnitt (1 b) des einen Teiles (1) zwecks Bildung einer umklappbaren, tabförmigen Anfasszone (6) mit einem Abschnitt (2b) des anderen Teiles (2) verbunden ist und dass die übrigen Abschnitte (1a, 2a) der beiden Teile (1, 2) die Abdeckfläche bilden.

2. Abdeckpflaster nach Anspruch 1, **dadurch gekennzeichnet, dass** die Anfasszone (6) im umgeklappten Zustand innerhalb der Grenzen der Abdeckfläche zu liegen kommt.

3. Abdeckpflaster nach Anspruch 1 oder 2, **dadurch gekennzeichnet, dass** die Anfasszone (6) in der Gebrauchsposition im Winkel zur Abdeckfläche angeordnet ist.

4. Abdeckpflaster nach einem der Ansprüche 1 bis 3, **dadurch gekennzeichnet, dass** die die Anfasszone (6) bildenden Abschnitte (1 b, 2b) der beiden Teile (1, 2) unter Zwischenschaltung einer einen Bruchteil der Anfasszone (6) bildenden Fahne (5) miteinander verbunden sind.

5. Abdeckpflaster nach einem der Ansprüche 1 bis 4, **dadurch gekennzeichnet, dass** die das Pflaster bildenden Teile als Zuschnitte aus einem Bahnmaterial ausgebildet sind.
